# FASCICULE DE BREVET EUROPEEN

(11) **EP 0 451 030 B1**
(45) Date de publication et mention de la délivrance du brevet: **06.09.1995**
(21) Numéro de dépôt: 91400851.1
(22) Date de dépôt: 29.03.1991
(51) Int. Cl.: C08G 18/42, C08G 18/78, C08G 18/73, C08G 18/75, C08K 5/10

(54) **Procédé de fabrication d'une plaque ou d'une feuille en polycarbonate portant un revêtement souple résistant à la rayure**
Verfahren zur Herstellung einer Polycarbonatschicht oder eines Polycarbonatfilmes mit einer strahlungsbeständigen biegsamen Beschichtung
Process for the preparation of polycarbonate sheet or film carrying a radiation resistant flexible coating

(30) Priorité: 31.03.1990 DE 4010485
(43) Date de publication de la demande: 09.10.1991
(73) Titulaire: SAINT-GOBAIN VITRAGE, 92400 Courbevoie (FR); VEGLA Vereinigte Glaswerke GmbH, D-52066 Aachen (DE)
(72) Inventeur: Holzer, Gerhard, Dr., W-5100 Aachen (DE); Musil, Ingrid, W-5100 Aachen (DE); Jandeleit, Otto, Dr., W-5110 Alsdorf (DE); Gelderie, Udo, W-5100 Aachen (DE)
(74) Mandataire: Muller, René

(56) Documents cités:
- EP-A- 0 132 198
- EP-A- 0 190 517
- EP-A- 0 191 666
- EP-A- 0 285 859
- US-A- 4 435 450

## Description

L'invention concerne un procédé de fabrication d'une plaque ou d'une feuille d'un polymère résistant au choc, comme le polycarbonate, le polyméthacrylate de méthyle, portant un revêtement de surface souple, très élastique, résistant à la rayure en polyuréthane hautement transparent, par application d'un mélange de réaction contenant un composant isocyanate et un composant polyol sur la plaque ou la feuille.

Il est connu d'appliquer sur les plaques ou les feuilles d'un polymère sensible à la rayure, une couche souple résistante à la rayure d'un polyuréthane ayant des propriétés d'autoréparation. Cette couche souple résistante à la rayure peut soit être produite sous forme de feuille préfabriquée et être apposée sur la plaque ou la feuille avec interposition d'une couche de colle, soit être produite par application directe, à la surface des plaques ou des feuilles, d'un mélange de réaction formant la couche de polyuréthane par réaction (DE-OS 20 58 504).

Lorsque ces couches de polyuréthane souples doivent remplir leur fonction de couches résistantes à la rayure, différentes exigences concernant leur résistance à la rayure et leur comportement à l'usage sont imposées. Des couches de polyuréthane qui satisfont à ces exigences relatives à leurs propriétés sont connues. Il est cependant apparu que ces compositions de polyuréthane connues ne conviennent pas pour revêtir les polymères, en particulier pour revêtir les plaques ou les feuilles en polycarbonate qui peuvent être utilisées, par exemple pour former des vitrages pour véhicules à moteur terrestres, aériens, maritimes, ou des vitrages bâtiments. En particulier, les couches résistantes à la rayure connues de ce genre ont l'inconvénient de mal adhérer sur le polycarbonate. Il a été proposé d'élever l'adhérence des couches de polyuréthane souples sur le polycarbonate par addition de sels inorganiques de chrome, mais il s'est révélé que l'amélioration l'adhérence ainsi obtenue est insuffisante. De surcroît, les sels de chrome sont toxiques et difficiles à dissoudre dans le mélange de réaction.

Des exigences particulièrement sévères sont imposées à l'adhérence entre la couche souple résistante à la rayure et la feuille de polycarbonate dans les cas où une plaque de polycarbonate revêtue est stratifiée avec une feuille de verre à température élevée et sous pression élevée pour la fabrication d'une feuille de verre feuilleté contre les effractions ou le percement par le tir. Dans ce cas, l'assemblage des couches est exposé à une pression d'environ 10 atmosphères relatives à une température d'environ 140°C. Des tensions mécaniques notables naissent au sein des couches pendant ce procédé de stratification. Il est apparu que l'adhérence entre la plaque de polycarbonate et la couche souple résistante à la rayure de l'état connu de la technique est tellement affaiblie lors de ce traitement à chaud et sous prssion qu'elle ne résiste pas aux tests imposés ultérieurs. Lorsqu'on utilise des revêtements résistants à la rayure à base de systèmes contenant des solvants, s'ajoute à cela que déjà pour les plus petites quantités résiduelles de solvant, le polycarbonate manifeste une notable corrosion par fissuration sous tension.

Dans le domaine technique des vitrages de sécurité aptes à être utilisés en tant que pare-brise de véhicule à moteur, on connait d'après la publication du brevet EP-A-191 666 un vitrage formé d'une feuille de verte revêtue d'une couche de polyuréthane obtenue par pulvérisation d'un mélange réactionnel sélectionné pour procurer une couche ayant des propriétés d'absorbeur d'énergie.

Cette couche de polyuréthane est le cas échéant revêtue d'une couche de revêtement en polyuréthane résistant à la rayure et à l'abrasion. Il ne s'agit pas dans cette publication de revêtir une feuille rigide en une matière plastique résistant au choc du type polycarbonate par un revêtement anti-rayure.

L'invention a pour but de procurer un revêtement souple résistant à la rayure, convenant en particulier pour des substrats tels des plaques ou des feuilles de polycarbonate, ou d'autres polymères équivalents tels que le polyméthacrylate de méthyle, le chlorure de polyvinyle, le propionate de cellulose, l'acétate de cellulose, qui présente tant les propriétés physiques et mécaniques souhaitées, comme une transparence élevée, un trouble faible, un bon comportement d'autoréparation ou de reconstitution lors des sollicitations de surface et un bon comportement à l'usage, que de surcroît, une haute adhérence aux substrats qui résiste même à des sollicitations extrêmes.

Ce but est atteint conformément à l'invention, du fait que deux mélanges de réaction différents, exempts de solvant sont apportés l'un après l'autre sur la plaque ou la feuille de polycarbonate ou à base de polymères cités précédemment, à savoir :
- on apporte un premier mélange réactionnel apte à former une première couche de polyuréthane, ce mélange comprenant en tant que composant isocyanate au moins un diisocyanate aliphatique ou cycloaliphatique et en tant que composant polyol un composant consistant en au moins un polyol long difonctionnel de masse moléculaire comprise entre 500 et 4000 et au moins un polyol de fonctionnalité supérieure à 2, le rapport des groupements NCO aux groupements OH, NCO/OH étant compris entre 0,7 et 1,3;
- et lorsque la première couche est partiellement polymérisée, on apporte un deuxième mélange réactionnel apte à former une seconde couche de polyuréthane, ce mélange comprenant en tant que composant isocyanate au moins un polyisocyanate aliphatique trifonctionnel choisi notamment parmi les biurets, ou les isocyanurates du 1,6-hexaméthylènediisocyanate et en tant que composant polyol, au moins un polyol trifonctionnel de masse moléculaire comprise entre 250 et 4000 et choisi parmi les polyétherpolyols ou les polyesterpolyols (ex. polycaprolactonepolyols).

Conformément à l'invention, on applique donc deux couches de polyuréthane ayant des compositions différentes et des fonctions diversifiées. En l'occurence, la première couche a pour objet d'assurer une liaison bonne et durable avec le polycarbonate, tandis que la deuxième couche doit satisfaire aux exigences relatives à la résistance à la rayure et au comportement à l'usage, cependant que les deux couches doivent évidemment présenter une union mutuelle sans défaut. Tandis que le deuxième mélange réactionnel correspond aux compositions connues pour la fabrication de couches souples résistantes à la rayure, il s'agit pour le premier mélange réactionnel de compositions qui n'étaient pas connues jusqu'à présent sous cette forme pour la fabrication de couches souples résistantes à la rayure. Ce n'est que par la combinaison de ces deux couches qu'un revêtement résistant à la rayure qui satisfait aux exigences pratiques sous tous les rapports importants est possible sur le polycarbonate et aussi sur d'autres polymères, tels que le polyméthacrylate de méthyle, le chlorure de polyvinyle, le propionate de cellulose, l'acétate de cellulose.

Les diisocyanates convenables utilisés dans le cadre de l'invention pour former la première couche sont choisis notamment parmi les isocyanates difonctionnels aliphatiques suivants : hexaméthylènediisocyanate (HMDI), 2,2,4-triméthyl-1,6-hexanediisocyanate (TMDI), bis 4-isocyanatocyclohexylméthane (Hylène W), bis-3-méthyl-4- isocyanatocyclohexylméthane, 2,2 bis (4-isocyanatocyclohexyl)propane, 3-isocyanatométhyl-3,5,5 -triméthylcyclohexylisocyanate encore appelé isophorone diisocyanate (IPDI), m-xylylènediisocyanate (XDI), m- et p-tétraméthylxylylènediisocyanate (m- et p- TMXDI), trans-cyclohexane-1,4 diisocyanate (CHDI), 1,3 (diisocyanatométhyl)-cyclohexane (XDI hydrogéné).

De préférence, on choisit l'isophorone diisocyanate (IPDI) et avantageusement un mélange d'IPDI avec un produit d'addition d'isocyanate et d'urée.

Les polyols longs convenables pour former la première couche sont choisis parmi des polyétherdiols ou des polyesterdiols de masse moléculaire 500 - 4000 ; les polyesterdiols étant les produits d'estérification d'un diacide tel que l'acide adipique, succinique, palmitique, azelaïque, sébacique, o-phtalique, et d'un diol tel un éthylèneglycol, propanediol-1,3, butanediol - 1,4, hexanediol-1,6, les polyétherdiols de formule générale :

H ⁅ O (CH₂)ₙ⁆ ₘ OH

avec n = 2 à 6 ; m tel que la masse moléculaire soit située dans l'intervalle 500 - 4000, ou les polyétherdiols de formule générale : 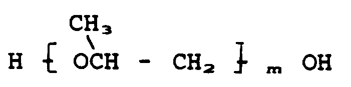
avec m tel que la masse moléculaire soit située également dans l'intervalle 500 - 4000. On peut encore utiliser des polycaprolactonediols, des polycarbonatediols.

En tant que polyol de fonctionnalité supérieure à deux, on choisi notamment des triols aliphatiques monomères tels le glycérol, le triméthylolpropane, des triols à chaînes polyéther, des priols de polycaprolactone, la masse moléculaire de ces triols étant généralement comprise entre 90 et 1000, des polyols mixtes polyéther-polyester de fonctionnalité supérieure à 2, par exemple de fonctionnalité comprise entre 2 et 3.

Les mélanges réactionnels préférés pour la première couche et la seconde couche selon l'invention sont les suivants :
a) pour la première couche, un mélange réactionnel :
   - dont le composant isocyanate comprend un polyisocyanate cycloaliphatique contenant un produit d'addition d'isocyanate et d'urée et de l'isophoronediisocyanate, ayant une teneur en radicaux NCO de 24 à 32 % en poids,
   - et dont le composant polyol comprend un polyester polyol bifonctionnel ayant une teneur en radicaux OH de 2,8 à 3,5 % en poids et une polycaprolactone trifonctionnelle ayant une teneur en radicaux de 8,5 à 11 % en poids, et
b) pour la deuxième couche, un mélange réactionnel :
   - dont le composant isocyanate comprend un polyisocyanate aliphatique trifonctionnel à base de 1,6-diisocyanatohexaméthylène à structure de biuret ou d'isocyanurate ayant une teneur en radicaux NCO de 12,6 à 28 % en poids,
   - et dont le composant polyol comprend un polyétherpolyol ayant une teneur en radicaux OH de 9 à 13 % en poids formé d'un produit de condensation d'oxyde de propylène avec du triméthylolpropane, ou d'une polycaprolactone trifonctionnelle ayant une teneur en radicaux OH de 8,5 à 11 % en poids.

De préférence, on utilise, pour le premier mélange réactionnel, un polyisocyanate ayant une teneur en radicaux NCO de 27 à 29 % en poids, de préférence de 28 % en poids, un polyester polyol bifonctionnel ayant une teneur en radicaux OH de 3,2 à 3,4 % en poids, de préférence de 3,3 % en poids, et une polycaprolactone trifonctionnelle ayant une teneur en radicaux OH de 9,5 à 9,7 % en poids, de préférence de 9,6 % en poids.

De préférence, on utilise, pour le deuxième mélange réactionnel, un polyisocyanate aliphatique trifonctionnel ayant une teneur en radicaux NCO de 22 à 24 % en poids, de préférence de 23 % en poids, et un polyéther polyol ayant une teneur en radicaux OH de 11,7 à 11,9 % en poids, de préférence de 11,8 % en poids, ou une polycaprolactone trifonctionnelle ayant une teneur en radicaux OH de 9,5 à 9,7 % en poids, de préférence de 9,6 % en poids.

De préférence, divers additifs sont incorporés aux deux mélanges de réaction, par exemple du dilaurate de dibutylétain en une quantité s'élevant jusqu'à 0,5 % comme catalyseur, des copolymères de polysiloxane modifiés ou des esters alcoyliques fluorés en une quantité de 0,05 à 0,5 % en poids comme agents d'étalement, du sébaçate de bis (1, 2,2,6,6-pentaméthyl-4-pipéridyle) en une quantité de 0,5 à 2 % en poids comme photostabilisant, et éventuellement des agents absorbant l'UV, comme des benzotriazoles substitués en une quantité de 0,5 à 5 % en poids.

Un autre avantage du procédé selon l'invention est qu'il ne nécessite pas de traitement particulier préalable du substrat avant son revêtement par la première couche de polyuréthane. En particulier, il n'est pas nécessaire de primer la surface du substrat ou de la traiter par des composés chimiques qui présentent généralement l'inconvénient de diminuer les propriétés de résistance mécaniques dudit substrat.

Les deux couches selon l'invention sont avantageusement formées sur le substrat par pulvérisation des mélanges réactionnels.

Selon une forme de réalisation des couches selon l'invention, la première couche est formée sur le substrat par pulvérisation, puis polymérisée partiellement seulement avant son recouvrement par pulvérisation de la seconde couche. En opérant ainsi, on obtient une très bonne cohésion entre les deux couches et on diminue la durée totale de polymérisation des deux couches. Le degré de polymérisation de la première couche avant son recouvrement par la deuxième couche et de préférence compris entre 40 et 80 %.

D'autres caractéristiques et avantages de l'invention apparaîtront dans la description suivante d'exemples de réalisation.

### EXEMPLE DE COMPARAISON

On munit une plaque en polycarbonate d'une épaisseur de 3 mm (produit MAKROLON de la Société BAYER ou LEXAN de la Société GENERAL ELECTRIC) appartenant à l'état connu de la technique d'une couche souple résistante à la rayure d'une épaisseur de 0,3 mm. A cet effet, on prépare un mélange de réaction exempt de solvant, à partir de :
- 100 g d'un polyisocyanate aliphatique trifonctionnel à base de 1,6-diisocyanatohexaméthylène à structure de biuret ayant une teneur en radicaux NCO de 23 % en poids (produit DESMODUR N 3200 de la Société BAYER),
- 100 g de polyétherpolyol ayant une teneur en radicaux OH de 11,8 % en poids,
- 0,3 g de dilaurate de dibutylétain,
- 0,1 g d'ester alcoylique fluoré,
- 0,1 g de sébaçate de bis (1,2,2,6,6-pentaméthyl-4-pipéridyle),
et on le pulvérise à l'aide d'un dispositif de pulvérisation en une couche d'épaisseur uniforme sur la plaque de polycarbonate. On fait durcir la couche pendant 20 minutes à 120°C.

On expose la plaque de polycarbonate munie de la couche de polyuréthane durcie à un cycle de température qui correspond au cycle de température d'une opération à l'autoclave pour la fabrication de vitrages feuilletés, à savoir un chauffage lent jusqu'à 140°C, un maintien à 140°C pendant 1 heure et ensuite un refroidissement lent jusqu'à la température ambiante.

Ensuite, on détermine l'adhérence de la couche de polyuréthane sur la plaque de polycarbonate au cours de l'épreuve dite d'arrachement. Cette épreuve d'arrachement consiste à arracher, par exemple sur une bande du substrat revêtu d'une largeur de 5 cm, le revêtement sous un angle de 90° par rapport au substrat et en mesurant et notant la force nécessaire à cet effet. La vitesse d'arrachage est de 5 cm/min.

Tandis que les valeurs d'adhérence avant l'exécution du cycle thermique sont tellement élevées qu'une séparation des deux matériaux n'est pas possible (adhérence non mesurable), les valeurs d'adhérence après l'exécution du cycle thermique tombent à une valeur de 11 (N/cm). Les valeurs d'adhérence baissent davantage jusqu'à 5 (N/cm) lorsqu'au cycle thermique succède encore une "épreuve d'humidité", pour laquelle la feuille revêtue est exposée pendant 14 jours à une humidité atmosphérique relative de 95 à 98 % à 50°C. Une plaque de polycarbonate ainsi revêtue ne se prête donc pas à une application pratique.

### EXEMPLE 1

On revêt une plaque en polycarbonate (MAKROLON) d'une épaisseur de 3 mm, d'une couche d'une épaisseur de 200 µm d'un mélange de réaction exempt de solvant de la composition suivante, au moyen d'un dispositif de pulvérisation :
- 33,3 g de polyisocyanate cycloaliphatique contenant un produit d'addition d'isocyanate et d'urée et de l'isophoronediisocyanate ayant une teneur en radicaux NCO de 28 % en poids (produit Polyisocyanate IPDI-H 2921 de la Société HUELS AG),
- 80 g de polyester bifonctionnel contenant des radicaux hydroxyle ayant une teneur en radicaux OH de 3,3 % en poids (produit Oxyester T 1136 de la Société HUELS AG),
- 20 g de polycaprolactone trifonctionnelle exempte de solvant ayant une teneur en radicaux OH de 9,6 % en poids (produit Tone 305 de la Société UNION CARBIDE),
- 0,06 g de dilaurate de dibutylétain,
- 0,1 g d'ester alcoylique fluoré.

Après 10 à 12 heures à la température ambiante, la couche est durcie jusqu'à environ 90 %. Dans cet état, elle présente, en raison des radicaux isocyanate résiduels non encore combinés, une certaine adhésivité en surface qui n'est plus présente après 1 à 2 jours après le durcissement complet sous l'influence de l'humidité atmosphérique. Cette activité superficielle ne gêne toutefois pas l'application de la deuxième couche, au contraire.

Pour la formation de la deuxième couche, on applique sur la première couche un mélange réactionnel exempt de solvant de la composition suivante en une épaisseur de couche de 300 µm, également à l'aide d'un dispositif de pulvérisation :
- 100 g de polyisocyanate aliphatique trifonctionnel à base de 1,6-diisocyanatohexaméthylène à structure de biuret ayant une teneur en radicaux NCO de 23 % en poids,
- 97 g de polycaprolactone trifonctionnelle ayant une teneur en radicaux OH de 3,6 % en poids,
- 0,15 g de dilaurate de dibutylétain,
- 0,1 g d'ester alcoylique fluoré,
- 0,1 g de sébaçate de bis (1,2,2,6,6-pentaméthyl-4-pipéridyle), et
- 0,2 g de benzotriazole substitué.

On laisse la couche durcir pendant 24 heures à la température ambiante.

On soumet la plaque de polycarbonate munie de ce revêtement double au même cycle de température que celui auquel a été soumise l'éprouvette étalon décrite dans l'exemple de comparaison et on détermine ensuite l'adhérence de la couche sur la plaque de polycarbonate par l'épreuve d'arrachement décrite dans l'exemple de comparaison. Il en ressort qu'une séparation des couches n'est pas possible.

### EXEMPLE 2

On revêt une feuille de LEXAN d'une épaisseur de 1 mm et on la traite comme décrit dans l'exemple 1, les mélanges de réaction ayant les compositions suivantes.

### Premier mélange réactionnel :

- 24,5 g de polyisoyanate cycloaliphatique exempt de solvant contenant un produit d'addition d'isocyanate et d'urée dissous dans de la diisocyanatoisophorone, ayant une teneur en radicaux NCO de 28 % en poids,
- 10,5 g d'isophoronediisocyanate exempt de solvant ayant une teneur en radicaux NCO de 37,3 % en poids (produit IPDI de la Société HUELS AG)
- 80 g de polyester bifonctionnel contenant des radicaux hydroxyle exempt de solvant ayant une teneur en radicaux OH de 3,3 % en poids,
- 20 g de polycaprolactone trifonctionnelle exempt de solvant ayant une teneur en radicaux OH de 9,6 % en poids,
- 0,5 g de dilaurate de dibutylétain, et
- 0,3 g de copolymère de polysiloxane modifié.

### Deuxième mélange réactionnel :

- 100 g de polyisocyanate aliphatique trifonctionnel exempt de solvant à base de 1,6-diisocyanatohexaméthylène à structure de biuret ayant une teneur en radicaux NCO de 23 % en poids,
- 93 g de polycaprolactone trifonctionnelle exempt de solvant ayant une teneur en radicaux OH de 9,6 % en poids,
- 0,05 g de dilaurate de dibutylétain,
- 0,4 g de copolymère de polysiloxane modifié,
- 0,1 g de sébaçate de bis (1,2,2,6,6-pentaméthyl-4-pipéridyle), et
- 0,2 g de benzotriazole substitué.

L'essai de l'adhérence au cours de l'épreuve d'arrachement indique qu'une séparation entre le revêtement et la feuille de LEXAN n'est pas possible.

### EXEMPLE 3

On procède en substance comme décrit dans l'exemple 1, les mélanges de réaction ayant les compositions suivantes.

### Premier mélange réactionnel :

- 50 g de polyisocyanate cycloaliphatique contenant un produit d'addition d'isocyanate et d'urée et de l'isophoronediisocyanate ayant une teneur en radicaux NCO de 28 % en poids (IPDI-H 2921 de HUELS),
- 50 g de polyester bifonctionnel contenant des radicaux hydroxyle exempt de solvant ayant une teneur en radicaux OH de 3,3 % en poids,
- 50 g de polycaprolactone trifonctionnelle exempt de solvant ayant une teneur en radicaux OH de 9,6 % en poids,
- 0,5 g de dilaurate de dibutylétain,
- 0,1 g d'ester alcoylique fluoré.

### Deuxième mélange réactionnel :

- 100 g de polyisocyanate aliphatique trifonctionnel exempt de solvant à base de 1,6-diisocyanatohexaméthylène à structure d'isocyanurate ayant une teneur en radicaux NCO de 23 % en poids,
- 95 g de polyétherpolyol exempt de solvant ayant une teneur en radicaux OH de 11 % en poids formé d'un produit de condensation d'oxyde de propylène avec le triméthylolpropane,
- 0,05 g de dilaurate de dibutylétain,
- 0,1 g d'ester alcoylique fluoré,
- 0,1 g de sébaçate de bis(1,2,2,6,6-pentaméthyl-4-pipéridyle), et
- 0,2 g de benzotriazole substitué.

On effectue le durcissement des deux couches chaque fois à environ 120°C sous un radiateur thermique avec une durée de durcissement de 20 minutes à chaque reprise.

L'essai de l'adhérence du revêtement ainsi formé sur les plaques de polycarbonate suivant l'épreuve d'arrachement, après exécution du cycle de température décrit dans l'exemple de comparaison, indique que le revêtement ne peut être arraché du substrat.

### EXEMPLE 4

On assemble une plaque de polycarbonate d'une épaisseur de 5 mm munie sur une face d'un revêtement souple résistant à la rayure conforme à l'exemple 3, avec d'autres feuilles de verre de silicate et des couches adhésives thermoplastiques, pour former un pare-brise anti-balles de vitrage automobile. A cet effet, on bombe ensemble à la forme souhaitée, de façon connue, plusieurs feuilles de verre de silicate superposées ayant, par exemple, chacune une épaisseur de 5 mm. Ensuite, on sépare les feuilles de verre de silicate qui ont été bombées ensemble et, en position horizontale, on les assemble avec des couches intermédiaires thermoplastiques de polyvinylbutyral en un paquet de couches présentant la face concave vers le haut. On applique sur la feuille de verre de silicate supérieure, une feuille d'une épaisseur d'environ 1,5 mm en polyuréthane thermoplastique (produit PE 192 de la Société QUINN) et sur cette feuille de polyuréthane thermoplastique, on dépose la plaque de polycarbonate revêtue avec la couche souple résistante à la rayure vers le haut. On dégaze le paquet de couches au cours d'un traitement sous vide dans une chambre à dépression suivant un procédé décrit dans le document DE-PS 20 24 781. A cet effet, le paquet de couches est enveloppé, dans la chambre à vide, dans une gaine ouverte au moins sur un côté faite d'un matériau souple étanche au vide, par exemple une feuille de polyamide, dont l'ouverture est scellée par soudure après le dégazage. Le paquet de couches dégazé est ensuite soumis, avec la gaine, au processus de stratification proprement dit dans un autoclave dans lequel le paquet de couches est exposé à une température de 130°C sous une pression d'environ 12 atmosphères relatives. Après environ 2 heures, la surpression est suppripmée et la feuille de verre stratifiée pressée finie est débarrassée de la gaine après refroidissement jusqu'à la température ambiante.

Le substrat revêtu de la double couche conformément à l'invention peut être utilisé avantageusement pour la fabrication de vitrages bâtiment, tels les vitrages anti-effractions, anti-balles, de vitrages de véhicules à moteur, tels des pare-brise d'automobile, de train, d'avion ou des hublots d'avion.

## Revendications

1. Procédé de fabrication d'une plaque ou d'une feuille d'un polymère résistant au choc choisi parmi le polycarbonate, le polyméthacrylate de méthyle le chlorure de polyvinyle, le propionate de cellulose et l'acétate de cellulose, portant un revêtement de surface souple, très élastique, résistant à la rayure en polyuréthane hautement transparent par application d'un mélange de réaction contenant un composant isocyanate et un composant polyol sur la plaque ou la feuille en polymère résistant au choc, caractérisé en ce que :
- on apporte sur la plaque ou la feuille un premier mélange réactionnel exempt de solvant apte à former une première couche de polyuréthane, ce mélange comprenant en tant que composant isocyanate, au moins un diisocyanate aliphatique ou cycloaliphatique, et en tant que composant polyol, un composant consistant en au moins un polyol long difonctionnel de masse moléculaire ayant une teneur comprise entre 500 et 4000 et au moins un polyol de fonctionnalité supérieure à 2, le rapport NCO/OH étant compris entre 0,7 et 1,3,
- et lorsque la première couche est partiellement polymérisée, on apporte un deuxième mélange réactionnel apte à former une deuxième couche de polyuréthane, ce mélange comprenant en tant que composant isocyanate au moins un polyisocyanate aliphatique trifonctionnel à base de 1,6-diisocyanatohexaméthylène à structure de biuret ou d'isocyanurate, et en tant que composant polyol au moins un polyol trifonctionnel de masse moléculaire comprise entre 250 et 4000 et choisi parmi les polyétherpolyols et les polyesterpolyols.

2. Procédé selon la revendication 1, caractérisé en ce que :
a) pour le premier mélange réactionnel :
- le composant isocyanate comprend un polyisocyanate cycloaliphatique contenant un produit d'addition d'isocyanate et d'urée et de l'isophoronediisocianate, ayant une teneur en radicaux NCO de 24 à 32 % en poids,
- et le composant polyol comprend un polyester polyol bifonctionnel ayant une teneur en radicaux OH de 2,8 à 3,5 % en poids et une polycaprolactone trifonctionnelle ayant une teneur en radicaux OH de 8,5 à 11 % en poids, et
b) et pour le deuxième mélange réactionnel :
- le composant isocyanate comprend un polyisocyanate aliphatique trifonctionnel à base de 1,6-diisocyanatohexaméthylène à structure de biuret ou d'isocyanurate ayant une teneur en radicaux NCO de 12,6 à 28 % en poids,
- et le composant polyol comprend un polyétherpolyol ayant une teneur en radicaux OH de 9 à 13 % en poids formé d'un produit de condensation d'oxyde de propylène avec du triméthylolpropane, ou d'une polycaprolactone trifonctionnelle ayant une teneur en radicaux OH de 8,5 à 11 % en poids.

3. Procédé selon une des revendications 1 ou 2, caractérisé en ce que, pour le premier mélange réactionnel, le composant isocyanate est un polyisocyanate ayant une teneur en radicaux NCO de 27 à 29 % en poids, de préférence de 28 % en poids, et le composant polyol est constitué d'un polyester polyol bifonctionnel ayant une teneur en radicaux OH de 3,2 à 3,4 % en poids, de préférence de 3,3 % en poids, et d'une polycaprolactone trifonctionnelle ayant une teneur en radicaux OH de 9,5 à 9,7 % en poids, de préférence de 9,6 % en poids.

4. Procédé selon une des revendications 1 à 3, caractérisé en ce que, pour le deuxième mélange réactionnel, le composant isocyanate est un polyisocyanate aliphatique trifonctionnel ayant une teneur en radicaux NCO de 22 à 24 % en poids, de préférence de 23 % en poids, et le composant polyol est constitué d'un polyéther polyol ayant une teneur en radicaux OH de 11,7 à 11,9 % en poids, de préférence de 11,8 % en poids, ou d'une polycaprolactone trifonctionnelle ayant une teneur en radicaux OH de 9,5 à 9,7 % en poids, de préférence de 9,6 % en poids.

5. Procédé selon l'une quelconque des revendications 1 à 4, caractérisé en ce que l'un des mélanges réactionnels ou les deux sont appliqués par pulvérisation ou arrosage.

6. Procédé selon l'une quelconque des revendications 1 à 5, caractérisé en ce que le deuxième mélange réactionnel est appliqué sur la couche formée par le premier mélange réactionnel avant que cette couche soit complètement durcie.

7. Procédé selon la revendication 6, caractérisé en ce que le deuxième mélange réactionnel est appliqué sur la première couche dont le degré de polymérisation est compris entre 40 et 80 %.

8. Procédé selon l'une quelconque des revendications 1 à 7, caractérisé en ce que les deux mélanges de réaction contiennent un catalyseur, comme du dilaurate de dibutylétain, en une quantité s'élevant jusqu'à 0,5 % en poids et un agent d'étalement, comme un copolymère de polysiloxane modifié ou un ester alcoylique fluoré, en une quantité de 0,05 à 0,5 % en poids.

9. Procédé selon l'une quelconque des revendications 1 à 6, caractérisé en ce que le deuxième mélange réactionnel et éventuellement aussi le premier mélange réactionnel contiennent un photo-stabilisant, comme du sébaçate de bis (1,2,2,6,6-pentaméthyl-4-pipéridyle), en une quantité de 0,5 à 2 % en poids et/ou un agent absorbant l'UV, comme des benzotriazoles substitués, en une quantité de 0,5 à 5 % en poids.

10. Plaque ou feuille d'un polymère revêtu par le procédé selon une des revendications 1 à 9.

11. Hublot pour avion, caractérisé en ce qu'il comprend une plaque ou feuille en polymère portant un revêtement, obtenue par le procédé selon une des revendications 1 à 9.

12. Utilisation d'une plaque ou d'une feuille en polymère notamment en polycarbonate portant une couche de couverture souple résistante à la rayure produite par un procédé suivant l'une quelconque des revendications 1 à 9 pour la fabrication de vitrages stratifiés contre l'effraction et/ou le percement par le tir, suivant laquelle la plaque ou la feuille est stratifiée avec interposition d'une couche adhésive thermoplastique au cours d'une opération à l'autoclave à température élevée et sous pression avec un vitrage de verte monolithique ou feuilleté, en particulier un pare-brise d'automobile feuilleté.

## Claims

1. Process for the production of a plate or a sheet of a shock resistant polymer chosen from among polycarbonate, polymethyl methacrylate, polyvinyl chloride, cellulose propionate and cellulose acetate, carrying a highly transparent polyurethane coating having a flexible, very elastic and scratch-resistant surface, by the application of a reaction mixture containing an isocyanate component and a polyol component to the shock resistant polymer plate or sheet, characterized in that:
- to the plate or sheet is applied a first solvent-free reaction mixture able to form a first polyurethane layer, said mixture incorporating as the isocyanate component at least one aliphatic or cycloaliphatic diisocyanate and as the polyol component a component consisting of at least one long, difunctional polyol having a molecular weight between 500 and 4000 and at least one polyol with a functionality higher than 2, the NCO:OH ratio being between 0.7 and 1,3,
- and when the first layer is partly polymerized, a second reaction mixture is applied able to form a second polyurethane layer, said mixture incorporating as the isocyanate component at least one trifunctional aliphatic polyisocyanate based on 1,6-diisocyanatohexamethylene having a biuret or isocyanurate structure and as the polyol component at least one trifunctional polyol of molecular weight between 250 and 4000 and chosen from among polyether polyols and polyester polyols

2. Process according to claim 1, characterized in that:
a) for the first reaction mixture:
- the isocyanate component comprises a cycloaliphatic polyisocyanate containing an addition product of isocyanate and urea and isophorone diisocyanate, having a NCO radical content of 24 to 32% by weight,
- and the polyol component comprises a bifunctional polyester polyol having an OH radical content of 2.8 to 3 5% by weight and a trifunctional polycaprolactone having an OH radical content of 8.5 to 11% by weight and
b) and for the second reaction mixture:
- the isocyanate component comprises a trifunctional aliphatic polyisocyanate based on 1,6-diisocyanatohexamethylene having a biuret or isocyanarate structure with a NCO radical content of 12.6 to 28% by weight,
- and the polyol component comprises a polyether polyol having an OH radical content of 9 to 13% by weight formed by a condensation product of propylene oxide with trimethylol propane, or trifunctional polycaprolactone with an OH radical content of 8 5 to 11% by weight.

3. Process according to one of the claims 1 or 2, characterized in that, for the first reaction mixture, the isocyanate component is a polyisocyanate having a NCO radical content of 27 to 29 and preferably 28% by weight and the polyol component is constituted by a bifunctional polyester polyol having an OH radical content of 3.2 to 3.4 and preferably 3 3% by weight and a trifunctional polycaprolactone having an OH radical content of 9.5 to 9.7% and preferably 9 6% by weight.

4. Process according to any one of the claims 1 to 3, characterized in that, for the second reaction mixture, the isocyanate component is a trifunctional aliphatic polyisocyanate having a NCO radical content of 22 to 24 and preferably 23% by weight, and the polyol component is constituted by a polyether polyol having an OH radical content of 11.7 to 11.9 and preferably 11.8% by weight, or a trifunctional polycaprolactone having an OH radical content of 9.5 to 9 7 and preferably 9.6% by weight.

5. Process according to any one of the claims 1 to 4, characterized in that one or both the reaction mixtures are applied by spraying or sprinkling.

6. Process according to any one of the claims 1 to 5, characterized in that the second reaction mixture is applied to the layer formed by the first reaction mixture before said layer has completely hardened

7. Process according to claim 6, characterized in that the second reaction mixture is applied to the first layer, whose degree of polymerization is between 40 and 80%.

8. Process according to any one of the claims 1 to 7, characterized in that the two reaction mixtures contain a catalyst, such as dibutyl tin dilaurate, in a quantity up to 0.5% by weight and a spreading agent, such as a modified polysiloxane copolymer or a fluorine alkyl ester, in a quantity of 0.05 to 0 5% by weight.

9. Process according to any one of the claims 1 to 6, characterized in that the second reaction mixture and optionally also the first reaction mixture contain a photostabilizer, such as bis(1,2,2,6,6-pentamethyl-4-piperidyl)-sebacate, in a quantity of 0.5 to 2% by weight and/or a UV absorbing agent, such as substituted benzotriazoles, in a quantity of 0.5 to 5% by weight.

10. Polymer plate or sheet coated by the process according to any one of the claims 1 to 9.

11. Aircraft window, characterized in that it comprises a polymer plate or sheet carrying a coating obtained by the process according to any one of the claims 1 to 9.

12. Use of a polymer plate or sheet, particularly of polycarbonate, carrying a scratch-resistant, flexible covering layer produced by a process according to any one of the claims 1 to 9 for the production of glazings laminated against breaking and/or piercing by shots, according to which the plate or sheet is laminated by interposing a thermoplastic adhesive layer during an operation in the autoclave at a high temperature and under pressure with a monolithic or laminated glass glazing, in particular a laminated car windscreen.

## Patentansprüche

1. Verfahren zur Herstellung einer Platte oder einer Folie aus einem schlagfesten Polymer wie Polycarbonat, Polymethylmethacrylat, Polyvinylchlorid, Cellulosepropionat oder Cellusoseacetat, mit einem weichen, hochelastischen kratzfesten Überzug aus hochtransparentem Polyurethan durch Auftragen einer eine Isocyanatkomponente und eine Polyolkomponente enthaltenden Reaktionsmischung auf die Platte oder Folie aus schlagfestem Polymer, **dadurch gekennzeichnet,** daß
- auf die Platte oder Folie eine erste lösungsmittelfreie, zur Bildung einer ersten Polyurethanschicht geeignete Reaktionsmischung aufgetragen wird, die als Isocyanatkomponente wenigstens ein aliphatisches oder cycloaliphatisches Diisocyanat, und als Polyolkomponente ein aus wenigstens einem langen difunktionellen Polyol mit einem Molekulargewicht zwischen 500 und 4000 und wenigstens einem Polyol mit einer Funktionalität von größer als 2 und einem NCO/OH-Verhältnis zwischen 0,7 und 1,3 bestehende Komponente umfaßt, und
- nach teilweiser Polymerisation der ersten Schicht eine zweite, zur Bildung einer zweiten Polyurethanschicht geeignete Reaktionsmischung aufgetragen wird, die als Isocyanatkomponente wenigstens ein aliphatisches trifunktionelles Polyisocyanat auf der Basis von 1,6 Hexamethylendiisocyanat mit Biuret- oder Isocyanuratstruktur, und als Polyolkomponente wenigstens ein aus einem Polyetherpolyol oder einem Polyesterpolyol bestehendes trifunktionelles Polyol mit einem Molekulargewicht zwischen 250 und 4000 enthält.

2. Verfahren nach Anspruch 1, dadurch gekennzeichnet, daß
a) für die erste Reaktionsmischung:
- die Isocyanatkomponente ein cycloaliphatisches Polyisocyanat umfaßt, das ein Isocyanatharnstoffaddukt und Isophorondiisocyanat enthält und einen Gehalt an NCO-Gruppen von 24 bis 32 Gew.-% aufweist, und
- die Polyolkomponente ein bifunktionelles Polyesterpolyol mit einem Gehalt an OH-Gruppen von 2,8 bis 3,5 Gew.-% und ein trifunktionelles Polycaprolacton mit einem Gehalt an OH-Gruppen von 8,5 bis 11 Gew.-% enthält, und
b) für die zweite Reaktionsmischung:
- die Isocyanatkomponente ein aliphatisches trifunktionelles Polyisocyanat auf der Basis von 1,6-Hexamethylendiisocyanat mit Biuret- oder Isocyanatstruktur mit einem Gehalt an NCO-Gruppen von 12,6 bis 28 Gew.-% umfaßt, und
- die Poyolkomponente ein Polyetherpolyol mit einem Gehalt an OH-Gruppen von 9 bis 13 Gew.-% aus einem Kondensationsprodukt aus Propylenoxid mit Trimethylolpropan, oder ein trifunktionelles Polycaprolacton mit einem Gehalt an OH-Gruppen von 8,5 bis 11 % Gew.-% enthält.

3. Verfahren nach Anspruch 1 oder 2, dadurch gekennzeichnet, daß für die erste Reaktionsmischung die Isocyanatkomponente ein Polyisocyanat mit einem Gehalt an NCO-Gruppen von 27 bis 29 Gew.-%, vorzugsweise von 28 Gew.-% ist, und daß die Polyolkponente aus einem bifunktionellen Polyesterpolyol mit einem Gehalt an OH-Gruppen von 3,2 bis 3,4 Gew.-%, vorzugsweise von 3,3 Gew.-%, und einem trifunktionellen Polycaprolacton mit einem Gehalt an OH-Gruppen von 9,5 bis 9,7 Gew.-%, vorzugsweise von 9,6 Gew.-%, besteht.

4. Verfahren nach einem der Ansprüche 1 bis 3, dadurch gekennzeichnet, daß für die zweite Reaktionsmischung die Isocyanatkomponente ein trifunktionelles aliphatisches Polyisocyanat mit einem Gehalt an NCO-Gruppen von 22 bis 24 Gew.-%, vorzugsweise von 23 Gew.-% ist, und daß die Polyolkomponente aus einem Polyaetherpolyol mit einem Gehalt an OH-Gruppen von 11,7 bis 11,9 Gew.-%, vorzugsweise 11,8 Gew.-%, oder einem trifunktionellen Polycaprolacton mit einem Gehalt an OH-Gruppen von 9,5 bis 9,7 Gew.-%, vorzugsweise 9,6 Gew.-%, besteht.

5. Verfahren nach einem der Ansprüche 1 bis 4, dadurch gekennzeichnet, daß eine oder beide Reaktionsmischungen durch Aufsprühen oder Aufspritzen aufgetragen werden.

6. Verfahren nach einem der Ansprüche 1 bis 5, dadurch gekennzeichnet, daß die zweite Reaktionsmischung auf die aus der ersten Reaktionsmischung gebildete Schicht aufgetragen wird, bevor diese Schicht vollständig ausgehärtet ist.

7. Verfahren nach Anspruch 6, dadurch gekennzeichnet, daß die zweite Reaktionsmischung auf die erste Schicht aufgetragen wird, wenn deren Polymerisationsgrad zwischen 40 und 80 % beträgt.

8. Verfahren nach einem der Ansprüche 1 bis 7, dadurch gekennzeichnet, daß beide Reaktionsmischungen einen Katalysator wie Dibutylzinndilaurat in einer Menge bis 0,5 Gew.-% und ein Verlaufsmittel wie ein modifiziertes Polysiloxancopolymer oder einen fluorierten Alkylester in einer Menge von 0,05 bis 0,5 Gew.-% enthalten.

9. Verfahren nach einem der Ansprüche 1 bis 6, dadurch gekennzeichnet, daß die zweite Reaktionsmischung, und gegebenenfalls auch die erste Reaktionsmischung, ein Lichtschutzmittel wie
Bis(1,2,2,6,6-pentamethyl-4-piperidyl)sebazat in einer Menge von 0,5 bis 2 Gew.-% und/oder ein UV-Absorptionsmittel wie substituierte Benzotriazole in einer Menge von 0,5 bis 5 % Gew.-% enthalten.

10. Platte oder Folie aus einem durch das Verfahren nach einem der Ansprüche 1 bis 9 mit einem Überzug versehenen Polymer.

11. Fensterscheibe für ein Flugzeug, dadurch gekennzeichnet, daß es eine Platte oder eine Folie aus einem mit einem Überzug versehenen Polymer umfaßt, der durch das Verfahren nach einem der Ansprüche 1 bis 9 hergestellt wurde.

12. Verwendung einer nach einem Verfahren der Ansprüche 1 bis 9 hergestellten Platte ode Folie aus einem Polymer, insbesondere aus Polycarbonat, mit weicher kratzfester Deckschicht für die Herstellung einbruchhemmender und/oder durchschußhemmender Verbundglasscheiben, indem die Platte oder Folie unter Zwischenschaltung einer thermoplastischen Kleberschicht in einem Autoklavprozeß bei erhöhter Temperatur und erhöhtem Druck mit einer monolytischen oder mit einer mehrschichtigen Glasscheibe, insbesonder einer mehrschichtigen Autoglasscheibe, verbunden wird.
